# EUROPÄISCHE PATENTANMELDUNG

(11) **EP 4 755 623 A1**
(43) Veröffentlichungstag der Anmeldung: **10.06.2026**
(21) Anmeldenummer: 24217363.1
(22) Anmeldetag: 04.12.2024
(51) Int. Cl.: B32B 3/26, B32B 5/02, B32B 5/18, B32B 5/32

(54) **POLYURETHANFORMKÖRPER**

(71) Anmelder: Covestro Deutschland AG, 51373 Leverkusen (DE)
(72) Erfinder: BOERGER, Thomas, 51377 Leverkusen (DE); RASSELNBERG, Harald, 41541 Dormagen (DE); REITHMEIER, Richard, 51069 Köln (DE); KRAUS, Thorsten Josef, 51375 Leverkusen (DE); ULBRICH, Dagmar, Dr., 40789 Monheim am Rhein (DE); WEIDEKAT, Stefan, 51467 Bergisch Gladbach (DE); HALUPCZOK, Bernard, 51371 Leverkusen (DE)
(74) Vertreter: Levpat

(57) **Zusammenfassung**

Die vorliegende Erfindung betrifft einen Polyurethan(PU)-Formkörper, ein Verfahren zur Herstellung des PU-Formkörpers und seine Verwendung, wobei die Kernschicht des PU-Formkörpers Polyurethanschaumstoff umfasst.

## Beschreibung

Die vorliegende Erfindung betrifft ein Verfahren zur Herstellung von Polyurethan(PU)-Formkörpern, sogenannten PU-Sandwichbauteilen, die PU-Formkörper und ihre Verwendung.

Verfahren zur Herstellung von Sandwich-Elementen für die Fertigung von flacher Plattenware gibt es seit langem. Der Sandwichaufbau besteht aus einem leichten und druckfesten Kern mit hochfesten Deckschichten. Der Verbund dieses Aufbaus erfolgt durch ein PU-Reaktionsgemisch, das - in der Regel beidseitig aufgetragen - in einem thermischen Pressverfahren eine unlösbare Verbindung aus Kernschicht, Verstärkungsschicht - in der Regel Verstärkungsfasern umfassend - und Polyurethanschaumstoff entstehen lässt. Die innenliegende Kernschicht des Sandwichaufbaus besteht vorzugsweise aus Pappe mit einer Wabenstruktur, die während des Pressvorgangs als Distanzhalter für die mit PU benetzten Deckschichten dient. Die Benetzung der Sandwichdeckschichten erfolgt vorzugsweise durch Besprühen. Der Substratträger wird dabei robotergeführt und befindet sich während des PU-Auftrags mittels Mischkopf in waagerechter oder senkrechter Position. Auch der Mischkopf kann robotergeführt sein.

Durch die Kombination aus Press- und Formgebungsverfahren können auch dreidimensional gestaltete Formkörper hergestellt werden. Der Wabenkern, der für Plattenware vollflächig um wenige zehntel Millimeter auf eine gleichbleibende Stärke gestaucht wird, wird nun in Teilbereichen bis auf wenige Prozent seines Ursprungmaßes verpresst. Die Gestaltung der Außenkontur des Fertigteils erfolgt über ein Abquetschen des Sandwichpaketes durch Pinchkanten im formgebenden Werkzeug, so dass das Bauteil nach der Formentnahme über geschlossene Außenkanten verfügt. Bei diesem Formgebungsverfahren erhält man ein dreidimensionales Bauteil, das unkaschierte Sichtflächen wie auch Sichtkanten aufweist.

Die bisherigen bekannten PU-Formkörper umfassen jedoch in der Regel eine Kernschicht, eine Verstärkungsschicht und einen Polyurethanschaumstoff, die wenigstens drei unterschiedlichen Werkstoffen - zum Beispiel Pappe, Glasfasern und Polyurethan - aufweisen. Wünschenswert wäre eine Reduktion der Anzahl der Werkstoffe, um etwa ein Recycling nach Ende der Verwendung des PU-Formkörpers zu vereinfachen.

Es wurde zwar verschiedentlich offenbart, dass die Kernschicht in PU-Formkörpern ebenfalls Polyurethan beinhalten kann, etwa in DE 2004 030 196 A1 oder DE 11 2008 000 525 A5, in denen jeweils ein thermoformbares Polyurethan als Kernschicht offenbart wird. Allerdings gibt es keine konkrete Offenbarung, wie eine solche PU-Kernschicht erhältlich sein könnte oder beschaffen sein müsste, um die mechanischen Anforderungen an diese PU-Formkörper zu erfüllen.

Aufgabe der vorliegenden Erfindung war es daher, einen PU-Formkörper und ein Verfahren zu dessen Herstellung bereitzustellen, in dem bei gleichzeitigem Erhalten ausreichender mechanischer Stabilität die Anzahl der verwendeten Werkstoffe gegenüber PU-Formkörpern reduziert werden kann. Insbesondere sollte hierbei auch eine Delamination der verschiedenen Schichten voneinander vermieden werden.

Diese Aufgabe konnte überraschenderweise dadurch gelöst werden, dass als Kernschicht ein duroplastischer Polyurethanschaumstoff verwendet wird.

Die Erfindung betrifft also einen Polyurethan-Formkörper umfassend einen duroplastischen Polyurethanschaumstoff als Kernschicht, eine Verstärkungsschicht und einen zweiten Polyurethanschaumstoff, der sich von dem duroplastischen Polyurethanschaumstoff unterscheidet.

Bevorzugt weist die Kernschicht eine Perforation durch wenigstens ein die Kernschicht durchziehendes Loch auf, also ein oder mehrere die Kernschicht durchziehendes Loch beziehungsweise durchziehende Löcher. Soweit im Folgenden bevorzugte oder obligatorische Merkmale der Löcher beschrieben werden, gelten diese auch für den Fall, dass ein einzelnes Loch vorliegt. Durchziehen bedeutet im Sinne dieser Anmeldung, dass die Löcher auf zwei gegenüberliegenden Seiten der Kernschicht jeweils zur Umgebung geöffnet sind, wobei die Löcher auch zumindest teilweise mit einem Material gefüllt sein können, das dann mit der Umgebung in Kontakt ist. Vor der Herstellung des PU-Formkörpers sind die Löcher vorzugsweise ungefüllt, wohingegen sie im erfindungsgemäßen PU-Formkörper vorzugsweise wenigstens teilweise mit dem zweiten Polyurethanschaumstoff, der auch eine Schicht außerhalb der Kernschicht bildet, gefüllt sind.

In einer weiterhin bevorzugten Ausführungsform weisen die Löcher jeweils unabhängig voneinander einen Durchmesser von 0,5 bis 10,0 mm, bevorzugt 1,0 bis 8,0 mm, mehr bevorzugt 2,0 bis 6,0 mm, am meisten bevorzugt 2,5 bis 5,5 mm oder 3,0 bis 5,0 mm auf.

In einer bevorzugten Ausführungsform sind die Löcher schlitzförmig ausgebildet und so angeordnet, dass sie wenigstens zwei Seiten eines Vielecks bilden. Besonders bevorzugt bilden diese Löcher ein regelmäßiges oder im Wesentlichen regelmäßiges Vieleck, mehr bevorzugt ein regelmäßiges oder im Wesentlichen regelmäßiges Sechseck. Auch hierbei ist denkbar, dass ein einzelnes Loch diese Ausbildung und Anordnung aufweist, wobei mehrere Löcher bevorzugt sind.

In einer anderen bevorzugten Ausführungsform sind die Kernschicht und die Verstärkungsschicht so angeordnet, dass die Kernschicht eine der Verstärkungsschicht zugewandte Seite aufweist und die Kernschicht auf der der Verstärkungsschicht zugewandten Seite wenigstens eine Vertiefung aufweist. Im Sinne dieser Anmeldung handelt es sich bei einer Vertiefung um eine dem Loch entsprechende Ausbildung, die aber im Gegensatz zum Loch nur auf einer Seite der Kernschicht zur Umgebung geöffnet beziehungsweise mit dieser verbunden ist. Soweit im Folgenden bevorzugte oder obligatorische Merkmale der Vertiefungen beschrieben werden, gelten diese auch für den Fall, dass eine einzelne Vertiefung vorliegt.

Vor der Herstellung des PU-Formkörpers sind die Vertiefungen vorzugsweise ungefüllt, wohingegen sie im erfindungsgemäßen PU-Formkörper vorzugsweise wenigstens teilweise mit dem zweiten Polyurethanschaumstoff, der auch eine Schicht außerhalb der Kernschicht bildet, gefüllt sind.

In einer bevorzugten Ausführungsform sind die Vertiefungen schlitzförmig ausgebildet. Besonders bevorzugt bilden sie ein Vieleck, noch mehr bevorzugt ein regelmäßiges oder im Wesentlichen regelmäßiges Vieleck, am meisten bevorzugt ein regelmäßiges oder im Wesentlichen regelmäßiges Sechseck aus.

In einer bevorzugten Ausführungsform weist die Kernschicht des PU-Formkörpers eine Dichte von höchstens 120 kg/m³, bevorzugt höchstens 100 kg/m³, zum Beispiel 15 - 100 kg/m³, besonders bevorzugt 30 - 80 kg/m³, am meisten bevorzugt 40 - 70 kg/m³ auf.

In einer weiteren bevorzugten Ausführungsform weist die Kernschicht des PU-Formkörpers eine geringe Rückstellung auf, das heißt sie lässt sich durch Komprimieren in ihrer Dicke reduzieren und behält diese Dicke nach Ende des Kompressionsvorgangs bei.

Weiterhin bevorzugt handelt es sich bei der Kernschicht des PU-Formkörpers um einen Schaumstoff mit einer Offenzelligkeit von wenigstens 40 %, mehr bevorzugt wenigstens 50 %, noch mehr bevorzugt wenigstens 60 %, insbesondere bevorzugt wenigstens 65 %, am meisten bevorzugt wenigstens 70 % auf. Im Rahmen dieser Erfindung ist die Offenzelligkeit jeweils bestimmbar gemäß DIN EN ISO 4590.

In einer bevorzugten Ausführungsform weist die Kernschicht des PU-Formkörpers eine Zugfestigkeit von 0,20 - 2,00 MPa, mehr bevorzugt 0,25 - 1,50 MPa, noch mehr bevorzugt 0,30 - 1,20 MPa auf. Im Rahmen dieser Erfindung ist die Zugfestigkeit jeweils bestimmbar gemäß DIN 53430.

In einer bevorzugten Ausführungsform weist die Kernschicht des PU-Formkörpers eine Druckfestigkeit von 0,05 - 1,00 MPa, mehr bevorzugt 0,10 - 0,80 MPa, noch mehr bevorzugt 0,15 - 0,60 MPa auf. Im Rahmen dieser Erfindung ist die Druckfestigkeit jeweils bestimmbar gemäß DIN EN 826.

In einer bevorzugten Ausfiihrungsform weist die Kernschicht des PU-Formkörpers eine Bruchdehnung von wenigstens 5 %, mehr bevorzugt wenigstens 8 %, noch mehr bevorzugt wenigstens 10 % auf. Im Rahmen dieser Erfindung ist die Bruchdehnung jeweils bestimmbar gemäß DIN 53430.

In einer ganz besonders bevorzugten Ausfuhrungsform weist die Kernschicht des PU-Formkörpers zwei oder mehr, am meisten bevorzugt alle, der vorstehend genannten physikalischen Eigenschaften auf.

In einer besonders bevorzugten Ausfuhrungsform bestehen die Kernschicht oder die zweite PU-Schaumstoff aus Polyurethan oder im Wesentlichen aus Polyurethan, am meisten bevorzugt bestehen sowohl die Kernschicht als auch der zweite PU-Schaumstoff aus Polyurethan oder im Wesentlichen aus Polyurethan.

Bei dem Polyurethan der Kernschicht sowie dem zweiten Polyurethanschaumstoff handelt es sich jeweils unabhängig voneinander um ein aus dem Stand der Technik prinzipiell bekanntes Polyurethan erhältlich aus der Reaktion einer Isocyanatkomponente mit einer gegenüber Isocyanaten reaktiven Komponente.

Grundsätzlich sind alle zur Herstellung von Polyurethanen üblichen gegenüber Isocyanaten reaktiven Verbindungen als Bestandteile der gegenüber Isocyanaten reaktiven Komponente geeignet, beispielsweise Polyetherpolyole, Polyesterpolyole, Polyetheresterpolyole, Polycarbonatpolyole oder Polyethercarbonatpolyole.

Beispielsweise können Polyetherpolyole eingesetzt werden, welche auf an sich bekannte Weise durch Polyaddition von Alkylenoxiden an polyfunktionelle Startersubstanzen in Gegenwart von Katalysatoren hergestellt werden können. Beispielsweise können die Polyetherpolyole aus einer Starterverbindung oder einem Starterverbindungsgemisch mit durchschnittlich 1,5 bis 8,0 aktiven Wasserstoffatomen und einem oder mehreren Alkylenoxiden hergestellt. Bevorzugte Starterverbindungen sind Moleküle mit 2 bis 8, insbesondere 3 bis 8, besonders bevorzugt 3 bis 6, Hydroxylgruppen pro Molekül wie Triethanolamin, Glycerin, Trimethylolpropan, Pentaerythrit, Sorbit und Saccharose. Die Startersubstanzen können allein oder im Gemisch, unter anderem mit difunktionellen Startersubstanzen wie Diethylenglykol, Dipropylenglykol, Triethylenglykol, Tripropylenglykol, 1,4-Butandiol, 1,6-Hexandiol verwendet werden. Bevorzugt verwendete Alkylenoxide sind Ethylenoxid, Propylenoxid und Butylenoxid. Diese können allein oder im Gemisch verwendet werden. Bei Verwendung im Gemisch ist es möglich, die Alkylenoxide statistisch oder blockweise oder beides abwechselnd umzusetzen.

Im Sinne dieser Anmeldung handelt es sich bei einem aktiven Wasserstoffatom um ein Wasserstoffatom einer gegenüber Isocyanaten reaktiven funktionellen Gruppe, also zum Beispiel um ein Wasserstoffatom einer OH-, NH-, CO₂H- oder SH-Gruppe.

Polyesterpolyole können beispielsweise durch Veresterung von Phthalsäureanhydrid, Terephthalsäure, Isophthalsäure, Glutar-, Bernstein-, und/oder Adipinsäure mit Ethylenglykol, Diethylenglykol, Propylenglykol, Butandiol, Hexandiol, Trimethylolpropan, Glycerin und anderen erhalten werden.

Polyesteretherpolyole können beispielsweise durch die für Polyesterpolyole beschriebene Veresterung erhalten werden, wenn es sich bei der Alkoholkomponente um ein zwei- oder mehrwertiges Polyetherpolyol, zum Beispiel eines der oben beschriebenen Polyetherpolyole, handelt. Bevorzugt werden Polyetherpolyole mit Mn = 150 bis 2000 g/mol zur Herstellung der Polyesteretherpolyole eingesetzt.

Polycarbonatpolyole sind beispielsweise durch Umsetzung von Phosgen, Dimethylcarbonat, Diethylcarbonat oder Diphenylcarbonat mit difunktionellen Alkoholen oder Polyesterpolyolen oder Polyetherpolyolen erhältlich. Hierzu verwendete Polyesterpolyole oder Polyetherpolyole können zum Beispiel den oben beschriebenen Polyesterpolyolen beziehungsweise Polyetherpolyolen entsprechen.

Polyethercarbonatpolyole sind beispielsweise aus der Umsetzung einer Startersubstanz, wie sie auch bei der Herstellung der Polyetherpolyole verwendet werden kann, mit Kohlendioxid und einem Alkylenoxid, vorzugsweise Ethylenoxid, Propylenoxid, Butylenoxid oder Mischungen aus wenigstens zwei hieraus, insbesondere bevorzugt in Gegenwart eines Doppelmetallcyanid-Katalysators, erhältlich.

In einer bevorzugten Ausführungsform ist der duroplastische PU-Schaumstoff als Kernschicht erhältlich aus einer ersten Polyurethanreaktionsmischung umfassend eine Polyisocyanatkomponente A umfassend wenigstens ein Polyisocyanat und eine Polyolkomponente B umfassend neben einer gegenüber Isocyanaten reaktiven Komponente B1 alle vorhandenen Bestandteile der ersten Polyurethanreaktionsmischung mit Ausnahme der Polyisocyanate und gegebenenfalls eines physikalischen Treibmittels.

Bevorzugt weist B1 eine zahlengemittelte Funktionalität von 1,5 - 3,5, mehr bevorzugt 1,9 - 3,0, am meisten bevorzugt 2,1 bis 2,8 auf. Im Rahmen dieser Anmeldung handelt es sich bei der Funktionalität einer Verbindung um die nominelle Funktionalität, die sich aus der Funktionalität des Starters bzw. der zahlengemittelten Funktionalität des Startergemischs ergibt. So hat beispielsweise ein Polyetherpolyol, das auf einem Startergemisch bestehend aus Ethylenglykol und Glycerin im mol-Verhältnis 1:1 beruht, eine Funktionalität von 2,5.

Bevorzugt umfasst B1 ein Polyetherpolyol B1-1 mit einer Funktionalität von 1,5 - 3,5, bevorzugt 1,6 - 3,2, besonders bevorzugt 1,8 - 3,0 und einem zahlengemittelten Molekulargewicht von 1000 - 8000 g/mol, dessen Starter wenigstens einen bi- oder trifunktionellen Alkohol umfasst oder daraus besteht. Besonders bevorzugt weist B1-1 ein zahlengemitteltes Molekulargewicht von 2000 - 6000 g/mol auf.

Weiterhin besonders bevorzugt umfasst B1-1 das Reaktionsprodukt eines bi- oder trifunktionellen Alkohols mit einem C₂-C₄-Alkylenoxid, insbesondere bevorzugt mit wenigstens zwei verschiedenen C₂-C₄-Alkylenoxiden, zum Beispiel Ethylenoxid und Propylenoxid; oder B1-1 besteht aus dem vorgenannten Reaktionsprodukt. Ganz besonders bevorzugt umfasst der Alkylenoxidanteil von B1-1 Ethylenoxid in einer Menge von 0,1 - 50,0 Gew.-%, insbesondere 5,0 - 40,0 Gew.-%, vorzugsweise 10,0 - 35,0 Gew.-%, jeweils bezogen auf die Gesamtmenge an Alkylenoxid in B1-1. Gleichermaßen ganz besonders bevorzugt umfasst der Alkylenoxidanteil von B1-1 Propylenoxid in einer Menge von 50,0 - 99,9 Gew.-%, insbesondere 60,0 - 95,0 Gew.-%, vorzugsweise 65,0 - 90,0 Gew.-%, jeweils bezogen auf die Gesamtmenge an Alkylenoxid in B1-1, wobei am meisten bevorzugt ist, dass sich die Anteile von Propylenoxid und Ethylenoxid zu 100 Gew.-%, bezogen auf die Gesamtmenge an Alkylenoxid in B1-1, addieren. Außerdem ganz besonders bevorzugt umfasst B1-1 in seinem Alkylenoxidteil Ethylenoxid als Endblock.

Außerdem besonders bevorzugt umfasst, sofern vorhanden, der bifunktionelle Alkohol in B1-1 wenigstens eine Verbindung ausgewählt aus Wasser, Ethylenglykol, Diethylenglykol, 1,2-Propylenglykol, Dipropylenglykol, 1,3-Propylenglykol, 1,4-Butylenglykol, 1,4-Butendiol, 1,4-Butindiol, Neopentylglykol, 1,5-Pentandiol, Methylpentandiolen (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexanen (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole), oder Mischungen von zwei oder mehr der vorgenannten Verbindungen, am meisten bevorzugt wird 1,2-Propylenglykol verwendet. Gleichermaßen besonders bevorzugt umfasst, sofern vorhanden, der trifunktionelle Alkohol in B1-1 wenigstens eine Verbindung aus Glycerin, Trimethylolpropan, Triethanolamin, oder Mischungen von zwei oder drei der vorgenannten Verbindungen.

Bevorzugt umfasst B1 ein Polyetherpolyol B1-2 mit einer Funktionalität von 1,5 - 3,9, bevorzugt 1,9 - 3,5, besonders bevorzugt 2,2 - 3,2 und einem zahlengemittelten Molekulargewicht von 100 - 600 g/mol, dessen Starter wenigstens einen bi- oder trifunktionellen Alkohol umfasst oder daraus besteht. Besonders bevorzugt weist B1-2 ein zahlengemitteltes Molekulargewicht von 200 - 500 g/mol, mehr bevorzugt von 250 - 450 g/mol auf. B1 kann B1-1 und B1-2 oder auch nur eines aus B1-1 und B1-2 umfassen.

Weiterhin besonders bevorzugt umfasst B1-2 das Reaktionsprodukt eines bi- oder trifunktionellen Alkohols mit einem C₂-C₄-Alkylenoxid, insbesondere bevorzugt mit Propylenoxid; oder B1-2 besteht aus dem vorgenannten Reaktionsprodukt. Ganz besonders bevorzugt umfasst der Alkylenoxidanteil von B1-2 Propylenoxid in einer Menge von 50,0 - 100,0 Gew.-%, insbesondere 80,0 - 100,0 Gew.-%, vorzugsweise 90,0 - 100,0 Gew.-%, jeweils bezogen auf die Gesamtmenge an Alkylenoxid in B1-2, wobei am meisten bevorzugt ist, dass ausschließlich Propylenoxid als Alkylenoxid in B1-2 vorliegt.

Außerdem besonders bevorzugt umfasst, sofern vorhanden, der bifunktionelle Alkohol in B1-2 wenigstens eine Verbindung ausgewählt aus Wasser, Ethylenglykol, Diethylenglykol, 1,2-Propylenglykol, Dipropylenglykol, 1,3-Propylenglykol, 1,4-Butylenglykol, 1,4-Butendiol, 1,4-Butindiol, Neopentylglykol, 1,5-Pentandiol, Methylpentandiolen (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexanen (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole), oder Mischungen von zwei oder mehr der vorgenannten Verbindungen. Gleichermaßen besonders bevorzugt umfasst, sofern vorhanden, der trifunktionelle Alkohol in B1-2 wenigstens eine Verbindung aus Glycerin, Trimethylolpropan, Triethanolamin, oder Mischungen von zwei oder drei der vorgenannten Verbindungen, am meisten bevorzugt weist B1-2 einen trifunktionellen Alkohol auf, insbesondere Trimethylolpropan.

Bevorzugt umfasst B1 ein von B1-2 verschiedenes Polyetherpolyol B1-3 mit einer Funktionalität von 1,5 - 3,5, bevorzugt 1,6 - 3,2, besonders bevorzugt 1,8 - 3,0 und einem zahlengemittelten Molekulargewicht von 100 - 400 g/mol, dessen Starter wenigstens einen bi- oder trifunktionellen Alkohol umfasst oder daraus besteht. Besonders bevorzugt weist B1-1 ein zahlengemitteltes Molekulargewicht von 150 - 300 g/mol auf. B1 kann B1-1, B1-2 und B1-3 oder auch nur eines oder eine beliebige Kombination von zwei aus B1-1, B1-2 und B1-3 umfassen.

Weiterhin besonders bevorzugt umfasst B1-3 das Reaktionsprodukt eines bi- oder trifunktionellen Alkohols mit einem C₂-C₄-Alkylenoxid, insbesondere bevorzugt mit Propylenoxid; oder B1-3 besteht aus dem vorgenannten Reaktionsprodukt. Ganz besonders bevorzugt umfasst der Alkylenoxidanteil von B1-3 Propylenoxid in einer Menge von 50,0 - 100,0 Gew.-%, insbesondere 80,0 - 100,0 Gew.-%, vorzugsweise 90,0 - 100,0 Gew.-%, jeweils bezogen auf die Gesamtmenge an Alkylenoxid in B1-3, wobei am meisten bevorzugt ist, dass ausschließlich Propylenoxid als Alkylenoxid in B1-3 vorliegt.

Außerdem besonders bevorzugt umfasst, sofern vorhanden, der bifunktionelle Alkohol in B1-3 wenigstens eine Verbindung ausgewählt aus Wasser, Ethylenglykol, Diethylenglykol, 1,2-Propylenglykol, Dipropylenglykol, 1,3-Propylenglykol, 1,4-Butylenglykol, 1,4-Butendiol, 1,4-Butindiol, Neopentylglykol, 1,5-Pentandiol, Methylpentandiolen (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexanen (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole), oder Mischungen von zwei oder mehr der vorgenannten Verbindungen, am meisten bevorzugt wird 1,2-Propylenglykol verwendet. Gleichermaßen besonders bevorzugt umfasst, sofern vorhanden, der trifunktionelle Alkohol in B1-3 wenigstens eine Verbindung aus Glycerin, Trimethylolpropan, Triethanolamin, oder Mischungen von zwei oder drei der vorgenannten Verbindungen.

Bevorzugt umfasst B1 ein Polyesteretherpolyol B1-4 mit einer Funktionalität von 1,5 - 3,5, bevorzugt 1,6 - 3,2, besonders bevorzugt 1,8 - 3,0 und einem zahlengemittelten Molekulargewicht von 100 - 350 g/mol, das beispielsweise aus der Reaktion wenigstens eines bi- oder trifunktionellen Alkohols mit wenigstens einer Bi- oder Tricarbonsäure und wenigstens einem Alkylenoxid erhältlich ist, bevorzugt aus der Reaktion eines bifunktionellen Alkohols mit einer bifunktionellen Säure und einem C₂-C₄-Alkylenoxid, oder B1-4 besteht daraus. Besonders bevorzugt weist B1-4 ein zahlengemitteltes Molekulargewicht von 100 - 350 g/mol, insbesondere bevorzugt 150 - 300 g/mol auf. B1 kann B1-1, B1-2, B1-3 und B1-4 oder auch nur eines oder eine beliebige Kombination von zwei oder drei aus B1-1, B1-2, B1-3 und B1-4 umfassen. Anstelle von freien Polycarbonsäuren können bei der Herstellung von Polyesteretherpolyolen die jeweiligen Polycarbonsäureanhydride oder Polycarbonsäureester niederer Alkohole verwendet werden.

Weiterhin besonders bevorzugt umfasst B1-4 das Reaktionsprodukt eines bifunktionellen Alkohols mit einer Bicarbonsäure und Propylenoxid; oder B1-4 besteht aus dem vorgenannten Reaktionsprodukt. Ganz besonders bevorzugt umfasst der Anteil von Propylenoxid am gesamten zur Herstellung von B1-4 eingesetzten Alkylenoxid 50,0 - 100,0 Gew.-%, insbesondere 80,0 - 100,0 Gew.-%, vorzugsweise 90,0 - 100,0 Gew.-%, jeweils bezogen auf die Gesamtmenge an zur Herstellung von B1-4 eingesetzten Alkylenoxid, wobei am meisten bevorzugt ist, dass ausschließlich Propylenoxid als Alkylenoxid eingesetzt wird. Hierbei ist für die Fachperson klar, dass hierbei auf das eingesetzte Epoxid Bezug genommen wird, aber zum Beispiel Diethylenglykol oder ähnliche Verbindungen, falls es als bifunktioneller Alkohol eingesetzt wird, nicht zur Menge an Alkylenoxid, das zur Herstellung von B1-4 eingesetzt wird, gezählt wird.

Außerdem besonders bevorzugt umfasst, sofern vorhanden, der bifunktionelle Alkohol in B1-4 wenigstens eine Verbindung ausgewählt aus Wasser, Ethylenglykol, Diethylenglykol, 1,2-Propylenglykol, Dipropylenglykol, 1,3-Propylenglykol, 1,4-Butylenglykol, 1,4-Butendiol, 1,4-Butindiol, Neopentylglykol, 1,5-Pentandiol, Methylpentandiolen (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexanen (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole), oder Mischungen von zwei oder mehr der vorgenannten Verbindungen, am meisten bevorzugt wird 1,2-Propylenglykol verwendet. Gleichermaßen besonders bevorzugt umfasst, sofern vorhanden, der trifunktionelle Alkohol in B1-4 wenigstens eine Verbindung aus Glycerin, Trimethylolpropan, Triethanolamin, oder Mischungen von zwei oder drei der vorgenannten Verbindungen. Gleichermaßen besonders bevorzugt umfasst die Bi- oder Tricarbonsäure Phthalsäureanhydrid, Terephthalsäure, Isophthalsäure, Glutar-, Bernstein-, und/oder Adipinsäure.

In einer bevorzugten Ausführungsform umfasst die Polyolkomponente B sowohl B1-1, B1-2, B1-3 als auch B1-4, besonders bevorzugt B1-1, B1-2 und B1-3 jeweils unabhängig voneinander in einer Menge von 15,0 - 50,0 Gew.-% und B1-4 in einer Menge von 2,0 - 10,0 Gew.-%, jeweils bezogen auf die Gesamtmenge der Polyolkomponente B. Noch mehr bevorzugt betragen die Mengenanteile von B1-1, B1-2 und B1-3 jeweils unabhängig voneinander 18,0 - 45,0 Gew.-%, ganz besonders bevorzugt jeweils unabhängig voneinander 20,0 - 40,0 Gew.-% oder 23,0 - 35,0 Gew.-% und der Mengeanteil von B1-4 2,5 - 8,0 Gew.-% oder 3,0 - 7,0 Gew.-%. Am meisten bevorzugt besteht die gegenüber Isocyanaten reaktive Komponente B1 aus den genannten Mengenanteilen an B1-1, B1-2, B1-3 und B1-4.

In einer bevorzugten Ausfuhrungsform ist der zweite Polyurethanschaumstoff erhältlich aus einer zweiten Polyurethanreaktionsmischung umfassend eine Polyisocyanatkomponente A' umfassend wenigstens ein Polyisocyanat und eine Polyolkomponente B' umfassend neben einer gegenüber Isocyanaten reaktiven Komponente B1' alle vorhandenen Bestandteile der zweiten Polyurethanreaktionsmischung mit Ausnahme der Polyisocyanate und gegebenenfalls eines physikalischen Treibmittels.

Bevorzugt umfasst die gegenüber Isocyanaten reaktive Komponente B1' mindestens eine Komponente mit mindestens zwei reaktiven Wasserstoffatomen B1-1'. Grundsätzlich ist jede isocyanatreaktive Komponente, die für die Verwendung bei der Herstellung von Polyurethanen geeignet ist, akzeptabel, wie z. B. Polyole oder Amine, insbesondere Polyetherpolyole, Polyesterpolyole, Polycarbonatpolyole, Polyetheresterpolyole oder Polyethercarbonatpolyole. Besonders bevorzugt sind Polyetherpolyole. Diese geeigneten Polyole sind der Fachperson bekannt.

Für B 1' geeignete Polyetherpolyole umfassen Additionsprodukte der Reaktion von Styroloxid, Ethylenoxid, Propylenoxid, Butylenoxid und/oder Epichlorhydrin mit di- oder polyfunktionellen Starterverbindungen, wie Alkoholen, Aminen, Thiolen oder Mischungen der vorstehend genannten. Bevorzugte Ausgangsverbindungen umfassen Kohlenhydrate wie Sorbit oder Saccharose, Mischungen davon oder Mischungen von Kohlenhydraten, insbesondere Sorbit oder Saccharose, und niedermolekulare Alkohole wie Ethylenglykol, Diethylenglykol oder Propylenglykol.

Geeignete Polyesterpolyole umfassen Polykondensate von di-, tri- odertetrafunktionellen Alkoholen mit di-, tri- oder tetrabasischen Carbonsäuren oder Hydroxycarbonsäuren. Anstelle von freien Polycarbonsäuren können bei der Herstellung von Polyesterpolyolen die jeweiligen Polycarbonsäureanhydride oder Polycarbonsäureester niederer Alkohole verwendet werden.

Geeignete Polyetherester-Polyole sind solche Verbindungen, die Ethergruppen, Estergruppen und OH-Gruppen enthalten. Organische Dicarbonsäuren mit bis zu 12 Kohlenstoffatomen oder Derivate davon eignen sich für die Herstellung dieser Polyetherester-Polyole. Als weitere Komponente für die Herstellung der Polyetherester-Polyole werden Polyetherpolyole verwendet, die durch Alkoxylierung von Startermolekülen gewonnen werden, wie z.B. mehrwertige Alkohole. Die Startermoleküle sind mindestens difunktional, können aber gegebenenfalls auch Anteile von höherfunktionellen, insbesondere trifunktionalen Startermolekülen enthalten. Polyetherester-Polyole können auch durch Alkoxylierung von Reaktionsprodukten hergestellt werden, die durch die Reaktion von organischen Dicarbonsäuren und deren Derivaten und Komponenten mit reaktiven Wasserstoffatomen erhalten werden.

Polycarbonat-Polyole, die verwendet werden können, sind Polycarbonate, die Hydroxylgruppen enthalten, z. B. Polycarbonat-Diole. Diese sind erreichbar durch Umsetzung von Kohlensäurederivaten, wie Diphenylcarbonat, Dimethylcarbonat oder Phosgen, mit Polyolen, vorzugsweise Diolen, oder durch Copolymerisation von Alkylenoxiden, wie Propylenoxid, mit CO₂.

Anstelle oder zusätzlich zu reinen Polycarbonat-Diolen können auch Polyethercarbonat-Polyole verwendet werden, die beispielsweise durch Copolymerisation einer Starterverbindung, etwa einem Polyol oder Amin wie sie auch für die Polyetherpolyolsynthese verwendet werden, mit Alkylenoxiden und CO₂ erhalten werden können.

In einer Ausfuhrungsform der Erfindung umfasst die gegenüber Isocyanaten reaktive Komponente B1' ein Polyetherpolyol B1-1'mit einer OH-Zahl von 700 - 1000 mg KOH/g und einer Funktionalität von 2,0 - 4,0, erhältlich durch Umsetzung eines Alkylenoxids mit einem Alkohol. Vorzugsweise ist B1-1' ein Polyetherpolyol, das durch Propoxylierung von Trimethylolpropan erhalten werden kann, besonders bevorzugt mit einer OH-Zahl von 800 - 900 mg KOH/g und einer Funktionalität von 2,5 - 3,5. B1' umfasst B1-1' bevorzugt in einer Menge von 5,0 - 40,0 Gew.-%, mehr bevorzugt 10,0 - 35,0 Gew.-%, noch mehr bevorzugt 15,0 - 30,0 Gew.-%, bezogen auf die Menge der Polyolkomponente B'.

In einer Ausfuhrungsform umfasst B1' ein Polyetherpolyol B 1-2` mit einer OH-Zahl von 300 - 600 mg KOH/g und einer Funktionalität von 3,0 - 6,0, erhältlich durch Umsetzung eines Alkylenoxids mit einer Ausgangsverbindung, wobei die Ausgangsverbindung mindestens eine ist ausgewählt aus einem Kohlenhydrat, einem bifunktionellen Alkohol, der kein Kohlenhydrat ist, oder einem Gemisch der Vorstehenden. Vorzugsweise ist B 1-2' ein Polyetherpolyol, das durch Propoxylierung eines Gemisches aus Saccharose, Propylenglykol und Ethylenglykol erhalten wird, besonders bevorzugt mit einer OH-Zahl von 400 - 500 mg KOH/g und einer Funktionalität von 4,0 - 5,0. B1' umfasst B 1-2' bevorzugt in einer Menge von 20,0 - 80,0 Gew.-%, mehr bevorzugt 25,0 - 70,0 Gew.-%, noch mehr bevorzugt 30,0 - 65,0 Gew.-%, bezogen auf die Menge der Polyolkomponente B'.

In einer Ausfuhrungsform umfasst B1' ein von B1-2' verschiedenes Polyetherpolyol B 1-3' mit einer OH-Zahl von 250 - 550 mg KOH/g und einer Funktionalität von 2,0 - 4,0 erhältlich durch Umsetzung eines Alkylenoxids mit einem Alkohol. Vorzugsweise ist B 1-3' ein Polyetherpolyol, das durch Propoxylierung von Glycerin erhalten werden kann, besonders bevorzugt mit einer OH-Zahl von 350 - 450 mg KOH/g und einer Funktionalität von 2,5 - 3,5. B1' umfasst B1-3' bevorzugt in einer Menge von 2,0 - 25,0 Gew.-%, mehr bevorzugt 5,0 - 20,0 Gew.-%, noch mehr bevorzugt 5,0 - 15,0 Gew.-%.

B1' kann auch B1-1' und B1-2'; oder B1-1' und B1-3`; oder B1-2` und B1-3` umfassen.

In einer bevorzugten Ausfuhrungsform umfasst B1' sowohl B1-1' als auch B 1-2` und B1-3', besonders bevorzugt B 1-1 ` in einer Menge von 5,0 - 40,0 Gew.-%, mehr bevorzugt 10,0 - 35,0 Gew.-%, noch mehr bevorzugt 15,0 - 30,0 Gew.-%; B 1-2` besonders bevorzugt in einer Menge von 20,0 - 80,0 Gew.-%, mehr bevorzugt 25,0 - 70,0 Gew.-%, noch mehr bevorzugt 30,0 - 65,0 Gew.-%. B 1-3' kann in einer Menge von 2,0 - 25,0 Gew.-%, bevorzugt 5,0 - 20,0 Gew.-%, mehr bevorzugt 5,0 - 15,0 Gew.-%, wobei sich alle Mengenangaben auf die Menge der Polyolkomponente B' beziehen.

B1' kann ferner niedermolekulare isocyanatreaktive Komponenten B1-4', wie di- oder trifunktionelle Amine oder Alkohole mit einem Molekulargewicht von weniger als 400 g/mol, umfassen, beispielsweise Mono- oder Diethylenglykol, Glycerin, Ethylendiamin oder eine beliebige Kombination der Vorstehenden.

B1' kann B1-4' in einer Menge von 2,0 - 25,0 Gew.-%, bevorzugt 5,0 - 20,0 Gew.-%, mehr bevorzugt 5,0 - 15,0 Gew.-%, bezogen auf die Menge der Polyolkomponente B', umfassen.

Bevorzugt sind das Polyurethan der Kernschicht sowie der zweite Polyurethanschaumstoff erhältlich aus Treibmittel umfassenden Polyurethanreaktionssystemen. Es können unabhängig voneinander physikalische, chemische oder physikalische und chemische Treibmittel gemeinsam eingesetzt werden.

Unter physikalischen Treibmitteln werden im Rahmen der vorliegenden Erfindung solche Verbindungen verstanden, die aufgrund ihrer physikalischen Eigenschaften leicht flüchtig sind und nicht mit der Isocyanatkomponente reagieren. Die physikalischen Treibmittel können ausgewählt sein aus der Gruppe aus Kohlenwasserstoffen (z. B. n-Pentan, iso-Pentan, cyclo-Pentan, Butan, Isobutan, Propan), Ethern (z.B. Methylal), halogenierten Ethern, perfluorierten und teilfluorierten Kohlenwasserstoffen mit 1 bis 8 Kohlenstoffatomen, z. B. Perfluorhexan, HFC 245fa (1,1,1,3,3-Pentafluorpropan), HFC 365mfc (1,1,1,3,3-Pentafluorbutan), HFC 134a oder deren Mischungen verwendet, sowie (hydro)fluorierte Olefine, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie deren Gemische untereinander.

Zusätzlich zu oder auch statt der physikalischen Treibmittel können auch chemische Treibmittel verwendet werden. Bei diesen handelt es sich besonders bevorzugt um Wasser und/oder Ameisensäure. Besonders bevorzugt weisen die Polyurethanreaktionssysteme, aus denen das Polyurethan der Kernschicht und der zweite Polyurethanhartschaumstoff erhältlich sind, Wasser auf oder bestehen aus Wasser.

Geeignete Polyurethanreaktionssysteme zur Herstellung des Polyurethans der Kernschicht und des zweiten Polyurethanhartschaumstoffs umfassen eine Isocyanatkomponente umfassend ein Polyisocyanat. Grundsätzlich können die üblichen aliphatischen, cycloaliphatischen, araliphatischen Di- und/oder Polyisocyanate und insbesondere aromatischen Isocyanate zum Einsatz kommen, welche aus der Polyurethanchemie bekannt sind. Beispiele solcher geeigneter Polyisocyanate sind Ethylendiisocyanat, 1,4-Butylendiisocyanat, 1,5-Pentandiisocyanat, 1,6-Hexamethylendiisocyanat (HDI), 1,12-Dodecandiisocyant, Cyclobutan-1,3-diisocyanat, Cyclohexan-1,3- und -1,4-diisocyanat und Mischungen dieser Isomere, Isophorondiisocyanat (IPDI), 2,4- und 2,6-Hexahydrotoluylendiisocyanat und Mischungen dieser Isomere, 2,2,4- und/oder 2,4,4-Trimethylhexamethylendiisocyanat, Bis(4,4'-, 2,4'- und 2,2'-isocyanatocyclo-hexyl)methan oder Mischungen dieser Isomere, und aromatische Isocyanate der allgemeinen Formel R(NCO)z, wobei R ein polyvalenter organischer Rest ist, der einen Aromaten aufweist, und z eine ganze Zahl von mindestens 2 ist. Beispiele hierfür sind 1,3-Diisocyanato-o-xylol, 1,3-Diisocyanato-p-xylol, 1,3-Diisocyanato-m-xylol, 2,4-Diisocyanato-1-chlorobenzol, 2,4-Diisocyanato-1-nitro-benzol, 2,5-Diisocyanato-1-nitrobenzol, m-Phenylendiisocyanat, p-Phenylendiisocyanat, 2,4-Toluylendiisocyanat, 2,6-Toluylendiisocyanat, Mischungen aus 2,4- and 2,6-Toluylendiisocyanat, 2,2'-Methylendi(phenylisocyanat) (MDI), 2,4`-MDI, 4,4`-MDI, sowie deren höhere Homologe und Mischungen daraus, 1,5-Naphthalindiisocyanat, 1-Methoxy-2,4-phenylendiisocyanat, 4,4'-Biphenylendiisocyanat, 3,3'-Dimethyl-4,4'-diphenylmethandiisocyanat, und 3,3'-Dimethyldiphenylmethan-4,4'-diisocyanat; Triisocyanate, wie 4,4',4"-Triphenylmethantriisocyanat und 2,4,6-Toluoltriisocyanat, und Tetraisocyanate, wie 4,4'-Dimethyl-2,2'-5,5'-diphenylmethantetraisocyanat sowie, 1,3- und/oder 1,4-Bis-(2-isocyanato-prop-2-yl)-benzol (TMXDI), 1,3-Bis-(isocyanatomethyl)benzol (XDI).

Neben den vorstehend genannten Isocyanaten können auch modifizierte Isocyanate, wie z.B. solche mit Uretdion-, Isocyanurat-, Carbodiimid-, Uretonimin-, Allophanat- oder Biuretstruktur, eingesetzt werden, sowie modifizierte Isocyanate in Form von Prepolymeren, erhältlich aus der Umsetzung eines, oder mehrerer Polyisocyanate mit einem oder mehreren Polyolen Es ist möglich, dass das Isocyanat ein Präpolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Die Isocyanatkomponenten sowohl der Kernschicht als auch des zweiten Polyurethanschaumstoffs umfassen bevorzugt zumindest eines von monomerem MDI, oligomerem MDI, polymerem MDI und Mischungen aus wenigstens zwei der Vorgenannten.

Der NCO-Gehalt der Isocyanatkomponenten liegt vorzugsweise unabhängig voneinander über 25 Gew.-%, bevorzugt über 30 Gew.-%, besonders bevorzugt über 31,5 Gew.-%. Ihre NCO-Funktionalität liegt vorzugsweise bei 2,1 bis 2,9, ihre Viskosität liegt vorzugsweise bei ≤ 500 mPas (bei 25 °C), gemessen nach DIN 53019-1.

Neben der Isocyanatkomponente und der gegenüber Isocyanaten reaktiven Komponente sowie dem bevorzugten Treibmittel können die PU-Reaktionsmischungen unabhängig voneinander auch weitere in der Polurethanchemie übliche Stoffe aufweisen, zum Beispiel Katalysatoren, Schaumstabilisatoren, Farbmittel, anorganische Füllstoffe, Emulgatoren, Zellöffner, Flammschutzmittel, Emulgatoren, Reaktionsverzögerer, Stabilisatoren gegen Alterungs- und Witterungseinflüsse, Gleit- und Entformungsmittel (auch "Trennmittel"), Dispergierhilfen, Oxidationsverzögerer Weichmacher, anorganische flammhemmende Substanzen, phosphor- und/oder halogenhaltige organische Flammschutzmittel, fungistatisch und bakteriostatisch wirksame Substanzen, Pigmente und Farbstoffe sowie die an sich bekannten üblichen organischen und anorganischen Füllstoffe.

Insbesondere die zweite PU-Reaktionsmischung kann interne Trennmittel wie Fettsäuren, Fettsäureester oder Gemische aus Fettsäuren und Fettsäureestern enthalten.

Beispiele für geeignete Katalysatoren sind katalytisch aktive Metallverbindungen oder Aminverbindungen, zum Beispiel Zinn(II)-Salze von Carbonsäuren mit 2-24 Kohlenstoffatomen wie Zinn(II)-2-ethylhexanoat, Zinn(II)-2-butyloctoat oder Zinn(II)ricinoleat sowie Organozinn(IV)verbindungen wie Dibutylzinn(IV)dilaurat oder Dimethylzinn(IV)neodecanoat, nicht einbaubare Amine wie Triethylamin, Tributylamin, Dimethylcyclohexylamin, Dimethylbenzylamin, N-Methylimidazol, N-Methyl-,N-ethyl-,N-cyclohexylmorpholin, N,N,N',N'-Tetramethylethylendiamin, N,N,N',N'-Tetramethylbutylendiamin, N,N,N',N'-Tetramethylhexylendiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-[3,3,0]-octan, 1,4-Diaza-bicyclo-[2,2,2]-octan sowie einbaubare Amine wie N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyldipropanolamin, N,N,N'-Trimethyl-N'-hydroxyethylbisaminoethylether, N,N-Dimethylaminopropylharnstoff, N-(2-HydroxypropyI)-imidazol, N-(2-Hy-droxyethyl)-imidazol, N-(2-AminopropyI)-imidazol, 2-((Dimethylamino)ethyl)methylaminopropanol, 1,1'-((3-(Dimethylamino)propyl)imino)bis-2-propanol und/oder Umsetzungsprodukte aus Acetessigsäureethylester, Polyetherpolyolen und 1-(Dimethylamino)-3-aminopropan sowie insbesondere das Tallolsäure-Amidsalz des N,N-Dimethylaminopropylamins.

Beispiele für Schaumstabilisatoren sind Siloxan-Polyoxyalkylen-Copolymere, Organopolysiloxane, ethoxylierte Fettalkohole und Alkylphenole, fettsäurebasierte Aminoxide und Betaine und Ricinusöl- bzw. Ricinolsäureester.

Als Verstärkungsschicht können vorzugsweise Glasfasermatten, Glaserfaservliese, Glasfaserwirrlagen, Glasfasergewebe, geschnittene oder gemahlene Glas- oder Mineral-Fasern, Naturfasermatten und -gewirke, geschnittene Naturfasern und Fasermatten, -vliese und -gewirke auf Basis von Polymer-, Kohlenstoff- bzw. Aramidfasern sowie deren Mischungen eingesetzt werden. In einer bevorzugten Ausführungsform umfasst die Verstärkungsschicht Polyurethan, besteht im Wesentlichen aus Polyurethan oder besteht aus Polyurethan.

In einer bevorzugten Ausfiihrungsform dient eine Schicht S sowohl als Kernschicht als auch als Verstärkungsschicht. In diesem Fall besteht die Verstärkungsschicht aus dem gleichen Material wie die Kernschicht, so dass die Verstärkungsschicht und die Kernschicht nicht voneinander unterscheidbar sind. Insbesondere bevorzugt besteht diese Schicht S aus dem Material wie es in dieser Erfindung als bevorzugt für die Kernschicht beschrieben ist.

Die Erfindung betrifft auch ein Verfahren zur Herstellung eines Polyurethan-Formkörpers. Hierbei gelten alle oben für die Bestandteile des PU-Formkörpers beschriebenen bevorzugten Merkmale auch für die im Verfahren eingesetzten Bestandteile. Das erfindungsgemäße Verfahren umfasst die Schritte
i. Bereitstellen
   - einer Kernschicht umfassend einen duroplastischen Polyurethanschaumstoff erhältlich aus einer ersten Polyurethanreaktionsmischung,
   - einer Verstärkungsschicht,
   - und einer zweiten Polyurethanreaktionsmischung, die sich von der ersten Polyurethanreaktionsmischung unterscheidet,
ii. Vorlegen der Verstärkungsschicht auf der Kernschicht,
iii. Aufbringen der zweiten Polyurethanreaktionsmischung auf die Verstärkungsschicht, um ein Halbzeug zu erhalten,
iv. Einbringen des Halbzeugs in eine Form,
v. Komprimieren und Erwärmen des Halbzeugs in der Form, so dass die zweite Polyurethanreaktionsmischung aushärtet, um den Polyurethan-Formkörper zu erhalten,
vi. Entformen des Polyurethan-Formkörpers,
vii. gegebenenfalls Nachbearbeiten des in vi. erhaltenen Polyurethan-Formkörpers.

Es wird also neben einer Kernschicht umfassend einen duroplastischen PU-Schaumstoff, der aus einer ersten PU-Reaktionsmischung erhältlich ist, und einer Verstärkungsschicht eine zweite Polyurethanreaktionsmischung bereitgestellt, die sich von der ersten unterscheidet. Es wird auf der Kernschicht die Verstärkungsschicht vorgelegt, auf der wiederum die zweite Polyurethanreaktionsmischung aufgebracht wird, wodurch ein Halbzeug erhalten wird. Dieses wird in eine Form eingebracht und in dieser komprimiert und erwärmt. Die zweite Polyurethanreaktionsmischung härtet dadurch aus, und es wird der PU-Formkörper erhalten. Dieser wird entformt und gegebenenfalls nachbearbeitet.

In einer bevorzugten Ausführungsform wird das Komprimieren des Halbzeugs in Schritt v. so durchgeführt, dass die Kernschicht im Polyurethan-Formkörper eine geringere Dicke als vor dem Komprimieren des Halbzeugs aufweist, bevorzugt eine um höchstens 6 mm geringere Dicke, mehr bevorzugt eine um höchstens 4 mm geringere Dicke, besonders bevorzugt eine um höchstens 3 mm, am meisten bevorzugt eine um höchstens 2 mm geringere Dicke als vor dem Komprimieren des Halbzeugs.

Das Erwärmen in der Form kann beispielsweise so durchgeführt werden, dass die Form eine Temperatur zwischen 40 und 160 °C aufweist.

Die einzelnen Bestandteile der Polyurethanreaktionsmischungen werden bevorzugt in solchen Mengen zur Umsetzung gebracht, dass das Äquivalenzverhältnis (auch "Index" oder "NCO-Index") der Summe der NCO-Gruppen der Polyisocyanate zur Summe der gegenüber Isocyanatgruppen reaktiven Wasserstoffe der übrigen Komponenten 0,8:1,0 bis 1,4: 1,0, insbesondere bevorzugt 0,9:1,0 bis 1,3:1,0 beträgt.

Das bis Schritt iii. erzeugte Halbzeug wird bevorzugt so hergestellt, das zunächst auf die Kernschicht beidseitig eine Verstärkungsschicht, insbesondere eine Verstärkungsfaserschicht, aufgebracht wird. Danach wird mit der zweiten Polyurethanreaktionsmischung, insbesondere einer Polyurethan-Zweikomponentenmischung, d.h. einer Mischung aus einer Isocyanat- und einer gegenüber Isocyanaten reaktiven Komponente (auch "Polyolkomponente"), beaufschlagt. Gleichzeitig mit dieser Beaufschlagung können vorzugsweise zusätzlich partiell oder ganzflächig geschnittene Fasern aufgebracht werden. Die Anbindung dieser zusätzlich aufgetragenen, geschnittenen und mit PU benetzten Fasern ist gegeben.

Bei der Verwendung einer Verstärkungsfasermatte wird diese vorgelegt und in üblicher Weise mit der zweiten Polyurethanreaktionsmischung getränkt. Auch hier können gleichzeitig partiell oder ganzflächig geschnittene Fasern zusätzlich aufgebracht werden.

Die erfindungsgemäßen PU-Formkörper können nach der Entnahme aus dem Werkzeug ("Entformen") in einem Folgeschritt nach bekannten Verfahren mit Deckschichten oder Dekorstoffen kaschiert werden. Bei Verwendung geeigneter Deckschichten oder Dekorstoffe kann die Anbindung zum PU-Formkörper auch schon während des Herstellungsschrittes durch vorheriges Einlegen und gleichzeitiges Verpressen der Deckschicht oder des Dekorstoffes mit dem Halbzeug bzw. der Verstärkungsfasermatte in der Form erfolgen. Als Dekorwerkstoffe können hierbei gegen eine Durchtränkung mit Polyurethan gesperrte Textilstoffe, kompakte oder geschäumte Kunststofffolien sowie Sprüh- oder RIM-Häute aus Polyurethan verwendet werden. Als Deckschichten können auch für Außenanwendungen geeignete, vorgeformte Materialien wie Metallfolien oder -bleche sowie kompakte thermoplastische Kunststoff-Composites aus PMMA (Polymethylmethacrylat), ASA (Acrylester modifiziertes Styrol-Acryl-nitril-Terpolymer), PC (Polycarbonat), PA (Polyamid), PBT (Polybutylenterephtalat) und/oder PPO (Polyphenylenoxid) in lackierter, lackierfähig eingestellter oder eingefärbter Form verwendet werden. Als Deckschichten können ebenfalls kontinuierlich oder diskontinuierlich hergestellte Deckschichten auf Basis von Melamin-Phenol-, Phenol-Formaldehyd-, Epoxy- oder ungesättigten Polyester-Harzen verwendet werden. Bevorzugt werden als Deckschichten solche Materialien eingesetzt, die Polyurethane enthalten oder aus ihnen bestehen, zum Beispiel thermoplastische Polyurethane. Diese haben gegenüber anderen Materialien den oben genannten Vorteil, dass sie bereits beim Komprimieren und Erwärmen im Schritt v des erfindungsgemäßen Verfahrens auf den PU-Formkörper aufgebracht werden können.

In einer bevorzugten Ausführungsform des Verfahrens dient eine Schicht S sowohl als Kernschicht als auch als Verstärkungsschicht. In diesem Fall besteht die Verstärkungsschicht aus dem gleichen Material wie die Kernschicht, so dass die Verstärkungsschicht und die Kernschicht nicht voneinander unterscheidbar sind. Insbesondere bevorzugt besteht diese Schicht S aus dem Material wie es in dieser Erfindung als bevorzugt für die Kernschicht beschrieben ist. In diesem Fall entfallen das separate Bereitstellen einer Verstärkungsschicht in Schritt i. und das Vorlegen der Verstärkungsschicht auf der Kernschicht in Schritt ii. Außerdem wird die zweite Polyurethanreaktionsmischung in Schritt iii. direkt auf die Schicht S aufgebracht, wodurch das Halbzeug erhalten wird.

Die Erfindung betrifft weiterhin den PU-Formkörper erhältlich nach dem erfindungsgemäßen Verfahren.

Schließlich betrifft die Erfindung die Verwendung des erfindungsgemäßen PU-Formkörpers als Struktur- oder Verkleidungsbauteil, insbesondere für die Auto-, Möbel- und Bauindustrie.

## Patentansprüche

1. Polyurethan-Formkörper umfassend einen duroplastischen Polyurethanschaumstoff als Kernschicht, eine Verstärkungsschicht und einen zweiten Polyurethanschaumstoff, der sich von dem duroplastischen Polyurethanschaumstoff unterscheidet.

2. Polyurethan-Formkörper gemäß Anspruch 1, wobei die Kernschicht eine Perforation durch ein oder mehrere die Kernschicht durchziehendes Loch beziehungsweise durchziehende Löcher aufweist.

3. Polyurethan-Formkörper gemäß Anspruch 2, wobei das Loch oder die Löcher jeweils unabhängig voneinander einen Durchmesser von 0,5 bis 10,0 mm, bevorzugt 1,0 bis 8,0 mm, mehr bevorzugt 2,0 bis 6,0 mm, am meisten bevorzugt 2,5 bis 5,5 mm oder 3,0 bis 5,0 mm aufweist beziehungsweise aufweisen.

4. Polyurethan-Formkörper gemäß einem der Ansprüche 2 bis 3, wobei das Loch oder die Löcher schlitzförmig ausgebildet und so angeordnet ist beziehungsweise sind, dass es oder sie wenigstens zwei Seiten eines Vielecks, bevorzugt eines regelmäßigen oder im Wesentlichen regelmäßigen Vielecks, mehr bevorzugt eines regelmäßigen oder im Wesentlichen regelmäßigen Sechsecks bildet beziehungsweise bilden.

5. Polyurethan-Formkörper gemäß Anspruch 1, wobei die Kernschicht und die Verstärkungsschicht so angeordnet sind, dass die Kernschicht eine der Verstärkungsschicht zugewandte Seite aufweist und die Kernschicht auf der der Verstärkungsschicht zugewandten Seite wenigstens eine Vertiefung aufweist, wobei die Vertiefung bevorzugt schlitzförmig ausgebildet ist und mehr bevorzugt ein Vieleck, noch mehr bevorzugt ein regelmäßiges oder im Wesentlichen regelmäßiges Vieleck, am meisten bevorzugt ein regelmäßiges oder im Wesentlichen regelmäßiges Sechseck ausbildet.

6. Polyurethan-Formkörper gemäß einem der Ansprüche 1 bis 5, wobei die Kernschicht eine Dichte von höchstens 120 kg/m³, bevorzugt höchstens 100 kg/m³, besonders bevorzugt 60 - 80 kg/m³ aufweist.

7. Polyurethan-Formkörper gemäß einem der Ansprüche 1 bis 6, wobei der duroplastische Polyurethanschaumstoff als Kernschicht erhältlich ist aus einer zweiten Polyurethanreaktionsmischung, die eine Isocyanatkennzahl von 80 - 180 aufweist.

8. Polyurethan-Formkörper gemäß einem der Ansprüche 1 bis 7, wobei der duroplastische Polyurethanschaumstoff eine Offenzelligkeit, bestimmbar gemäß DIN EN ISO 4590, von wenigstens 40 %, bevorzugt wenigstens 50 %, mehr bevorzugt wenigstens 60 %, insbesondere bevorzugt wenigstens 65 %, am meisten bevorzugt wenigstens 70 % aufweist.

9. Polyurethan-Formkörper gemäß einem der Ansprüche 1 bis 8, wobei der duroplastische Polyurethanschaumstoff eine Bruchdehnung, bestimmbar gemäß DIN 53430, von wenigstens 5 %, bevorzugt wenigstens 8 %, mehr bevorzugt wenigstens 10 % aufweist.

10. Polyurethan-Formkörper gemäß einem der Ansprüche 1 bis 9, wobei die Verstärkungsschicht Polyurethan umfasst.

11. Polyurethan-Formkörper gemäß Anspruch 10, wobei die Kernschicht und die Verstärkungsschicht aus dem gleichen Material bestehen und gemeinsam eine Schicht S bilden.

12. Verfahren zur Herstellung eines Polyurethan-Formkörpers gemäß einem der Ansprüche 1 bis 11 umfassend die Schritte
i. Bereitstellen
- einer Kernschicht umfassend einen duroplastischen Polyurethanschaumstoff erhältlich aus einer ersten Polyurethanreaktionsmischung,
- einer Verstärkungsschicht,
- und einer zweiten Polyurethanreaktionsmischung, die sich von der ersten Polyurethanreaktionsmischung unterscheidet,
ii. Vorlegen der Verstärkungsschicht auf der Kernschicht,
iii. Aufbringen der zweiten Polyurethanreaktionsmischung auf die Verstärkungsschicht, um ein Halbzeug zu erhalten,
iv. Einbringen des Halbzeugs in eine Form,
v. Komprimieren und Erwärmen des Halbzeugs in der Form, so dass die zweite Polyurethanreaktionsmischung aushärtet, um den Polyurethan-Formkörper zu erhalten,
vi. Entformen des Polyurethan-Formkörpers,
vii. gegebenenfalls Nachbearbeiten des in vi. erhaltenen Polyurethan-Formkörpers.

13. Verfahren gemäß Anspruch 12, wobei das Komprimieren des Halbzeugs in Schritt v. so durchgeführt wird, dass die Kernschicht im Polyurethan-Formkörper eine geringere Dicke als vor dem Komprimieren des Halbzeugs aufweist.

14. Polyurethan-Formkörper, erhältlich nach dem Verfahren eines der Ansprüche 12 oder 13.

15. Verwendung des Polyurethan-Formkörpers gemäß Anspruch 14 als Struktur- oder Verkleidungsbauteil, insbesondere für die Auto-, Möbel- und Bauindustrie.
